# EUROPEAN PATENT APPLICATION

(11) **EP 4 053 690 A1**
(43) Date of publication of application: **07.09.2022**
(21) Application number: 20893966.0
(22) Date of filing: 06.11.2020
(51) Int. Cl.: G06F 3/0484

(54) **SPLIT-SCREEN DISPLAY PROCESSING METHOD AND APPARATUS, AND ELECTRONIC DEVICE**

(30) Priority: 29.11.2019 CN 201911207440
(71) Applicant: Huawei Technologies Co., Ltd., Shenzhen, Guangdong 518129 (CN)
(72) Inventor: LI, Zhan, Shenzhen, Guangdong 518129 (CN)
(74) Representative: MERH-IP Matias Erny Reichl Hoffmann Patentanwälte PartG mbB
(86) International application number: PCT/CN2020/126956
(87) International publication number: WO 2021/103981

(57) **Abstract**

A split-screen display processing method and apparatus, and an electronic device are provided. The split-screen display processing method is applied to an electronic device including a foldable touchscreen, the touchscreen is in an expanded state, and the method includes: The electronic device receives a touch operation that is entered by a user for a first application on the touchscreen (S102). The electronic device determines, in response to the touch operation, whether the touch operation is a preset operation that can trigger split-screen display (S104). When determining the touch operation as the preset operation, the electronic device indicates to divide a full-screen display area of the touchscreen into a first display area and a second display area based on a preset folding line, where the first display area displays a first interface of the first application, and the second display area displays a second interface of the first application (S106). The method can help quickly enter a split-screen display mode based on a user usage scenario, and improve user experience.

## Description

This application claims priority to Chinese Patent Application No. 2019112074403, filed with the China National Intellectual Property Administration on November 29, 2019 and entitled "SPLIT-SCREEN DISPLAY PROCESSING METHOD AND APPARATUS, AND ELECTRONIC DEVICE", which is incorporated herein by reference in its entirety.

### TECHNICAL FIELD

This application relates to the field of electronic device technologies, and specifically, to a split-screen display processing method and apparatus, and an electronic device.

### BACKGROUND

Currently, large screens are preferred by more users, but are inconvenient to carry. Therefore, foldable screens emerge, and the users want to apply the folded screens to electronic devices. In the conventional technology, split-screen display is mainly used to display two different applications on one screen. A user needs to enter a split-screen instruction (for example, two fingers slide from the bottom to the top of the screen) on a display interface of one application. In response to the split-screen instruction, a smart terminal displays two windows. One window displays the one application, and the other window displays the other application. However, in some scenarios of one application, when split-screen display is required, the electronic device cannot automatically identify a usage scenario to actively perform split-screen display, and a plurality of user operations are required. Consequently, user experience is poor.

### SUMMARY

Embodiments of this application provide a split-screen display processing method and apparatus, an electronic device, a computer-readable storage medium, and a computer program product, so that the electronic device can quickly enter a split-screen display mode based on a user usage scenario, to improve user experience.

According to a first aspect, an embodiment of this application provides a split-screen display processing method. The method is applied to an electronic device including a foldable touchscreen, the touchscreen is in an expanded state, and the method includes:

The electronic device receives a touch operation that is entered by a user for a first application on the touchscreen. The electronic device determines, in response to the touch operation, whether the touch operation is a preset operation that can trigger split-screen display. When determining the touch operation as the preset operation, the electronic device indicates to divide a full-screen display area of the touchscreen into a first display area and a second display area based on a preset folding line. The first display area displays a first interface of the first application, and the second display area displays a second interface of the first application.

In this manner, the electronic device can quickly enter a split-screen display mode based on a user usage scenario. This resolves a problem of poor user experience caused by a current rigid split-screen display mode.

According to a second aspect, this application provides a split-screen display processing apparatus. The apparatus includes:
a receiving module, configured to receive a touch operation that is entered by a user for a first application on a touchscreen;
a determining module, configured to determine, in response to the touch operation, whether the touch operation is a preset operation that can trigger split-screen display; and
a processing module, configured to: when the touch operation is determined as the preset operation, indicate to divide a full-screen display area of the touchscreen into a first display area and a second display area based on a preset folding line, where the first display area displays a first interface of the first application, and the second display area displays a second interface of the first application.

According to a third aspect, this application provides an electronic device. The electronic device includes a memory, at least one processor, and a touchscreen. The display is a foldable display; and the memory is coupled to the one or more processors, the memory is configured to store computer program code, the computer program code includes computer instructions, and when the one or more processors execute the computer instructions, the electronic device is enabled to perform the following operations:

The electronic device receives a touch operation that is performed by a user on a first application on the touchscreen. The electronic device determines, in response to the touch operation, whether the touch operation is a preset operation that can trigger split-screen display. When the touch operation is the preset operation, the electronic device indicates to divide a display interface of the touchscreen into a first display area and a second display area based on a preset folding line. The first display area displays a first interface of the first application, and the second display area displays a second interface of the first application.

According to a fourth aspect, this application provides a computer-readable storage medium, including instructions. When the instructions are run on an electronic device, the electronic device is enabled to perform the split-screen display processing method according to any one of the first aspect and the possible implementations of the first aspect.

According to a fifth aspect, an embodiment of this application provides a computer program product. When the computer program product runs on a computer, the computer is enabled to perform the split-screen display processing method according to any one of the first aspect and the possible implementations of the first aspect.

In embodiments of this application, the electronic device determines whether the touch operation related to the first application is the preset operation that can trigger split-screen display. When the touch operation is the preset operation, the electronic device directly indicates the touchscreen to enable split-screen display, so that the first interface of the first application is displayed in the first display area, and the second interface of the first application is displayed in the second display area. In this manner, the electronic device can quickly enter a split-screen display mode based on a user usage scenario. This resolves a problem of poor user experience caused by a current rigid split-screen display mode.

### BRIEF DESCRIPTION OF DRAWINGS

To describe the technical solutions in embodiments of this application more clearly, the following briefly describes the accompanying drawings required in embodiments. It is clear that the accompanying drawings in the following descriptions show some embodiments of this application, and persons of ordinary skill in the art may still derive other drawings from these accompanying drawings without creative efforts.
FIG. 1A is a schematic diagram of a structure an electronic device according to an embodiment of this application;
FIG. 1B is a block diagram of a software structure of an electronic device according to an embodiment of this application;
FIG. 2 is a schematic diagram of an interface displayed when an electronic device is in an expanded state according to an embodiment of this application;
FIG. 3 is a schematic diagram in which an electronic device is in a folded state according to an embodiment of this application;
FIG. 4 is a schematic flowchart of a split-screen display processing method according to an embodiment of this application;
FIG. 5A is a schematic diagram of another interface displayed when an electronic device is in an expanded state according to an embodiment of this application;
FIG. 5B is a schematic diagram of another interface displayed when an electronic device is in an expanded state according to an embodiment of this application;
FIG. 5C is a schematic diagram of another interface displayed when an electronic device is in an expanded state according to an embodiment of this application;
FIG. 6A is a schematic diagram of another interface displayed when an electronic device is in an expanded state according to an embodiment of this application;
FIG. 6B is a schematic diagram of another interface displayed when an electronic device is in an expanded state according to an embodiment of this application;
FIG. 6C is a schematic diagram of another interface displayed when an electronic device is in an expanded state according to an embodiment of this application;
FIG. 7A is a schematic diagram of another interface displayed when an electronic device is in an expanded state according to an embodiment of this application;
FIG. 7B is a schematic diagram of another interface displayed when an electronic device is in an expanded state according to an embodiment of this application;
FIG. 8A is a schematic diagram of another interface displayed when an electronic device is in an expanded state according to an embodiment of this application;
FIG. 8B is a schematic diagram of another interface displayed when an electronic device is in an expanded state according to an embodiment of this application;
FIG. 9A is a schematic diagram of another interface displayed when an electronic device is in an expanded state according to an embodiment of this application;
FIG. 9B is a schematic diagram of another interface displayed when an electronic device is in an expanded state according to an embodiment of this application;
FIG. 10A is a schematic diagram of another interface displayed when an electronic device is in an expanded state according to an embodiment of this application;
FIG. 10B is a schematic diagram of another interface displayed when an electronic device is in an expanded state according to an embodiment of this application;
FIG. 11A is a schematic diagram of another interface displayed when an electronic device is in an expanded state according to an embodiment of this application;
FIG. 11B is a schematic diagram of another interface displayed when an electronic device is in an expanded state according to an embodiment of this application; and
FIG. 12 is a schematic diagram of a structure of a split-screen display processing apparatus according to an embodiment of this application.

### DESCRIPTION OF EMBODIMENTS

To better understand the technical solutions of this application, the following describes embodiments of this application in detail with reference to the accompanying drawings.

It should be clear that the described embodiments are merely some rather than all of embodiments of this application. All other embodiments obtained by persons of ordinary skill in the art based on embodiments of this application without creative efforts shall fall within the protection scope of this application.

In this application, "at least one" means one or more, and "a plurality of' means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally represents an "or" relationship between the associated objects. In addition, "at least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

For ease of understanding, example descriptions of some concepts related to embodiments of this application are provided for reference. Details are described as follows:

A foldable display is a display that can be bent.

A capacitive touchscreen technology works through human body current induction. When a finger touches a metal layer, a coupling capacitor is formed between a user and a surface of a touchscreen due to a human body electric field. For a high frequency current, the capacitor is a direct conductor. Therefore, the finger sucks a small current from a touch point. The current separately flows from electrodes at four corners of the touchscreen, and the current flowing through each of the four electrodes is in direct proportion to a distance between the finger and each of the four corners. A processor may obtain a location of a touch point by accurately calculating four current proportions.

A term "user interface (user interface, UI)" in this specification, the claims, and the accompanying drawings of this application is a medium interface for interaction and information exchange between a user and an application or an operating system, and the interface implements conversion between an internal form of information and a form that can be accepted by the user. A user interface of an application is source code written in specific computer language such as Java or extensible markup language (extensible markup language, XML). Interface source code is parsed and rendered on an electronic device 100, and is finally presented as content that can be identified by the user, for example, a control such as a photo, a text, or a button. A control (control) is a basic element of a user interface. Typical controls include a button (button), a widget (widget), a toolbar (toolbar), a menu bar (menu bar), a text box (text box), a scrollbar (scrollbar), a photo, and a text. An attribute and content of a control on an interface are defined by using a tag or a node. For example, XML defines a control on the interface by using a node such as <Textview>, <ImgView>, or <VideoView>.

The user interface is usually represented in a form of a graphical user interface (graphical user interface, GUI), and is a user interface that is related to a computer operation and that is displayed in a graphic manner. The graphical user interface may be an interface element such as an icon, a window, or a control displayed on a display of an electronic device.

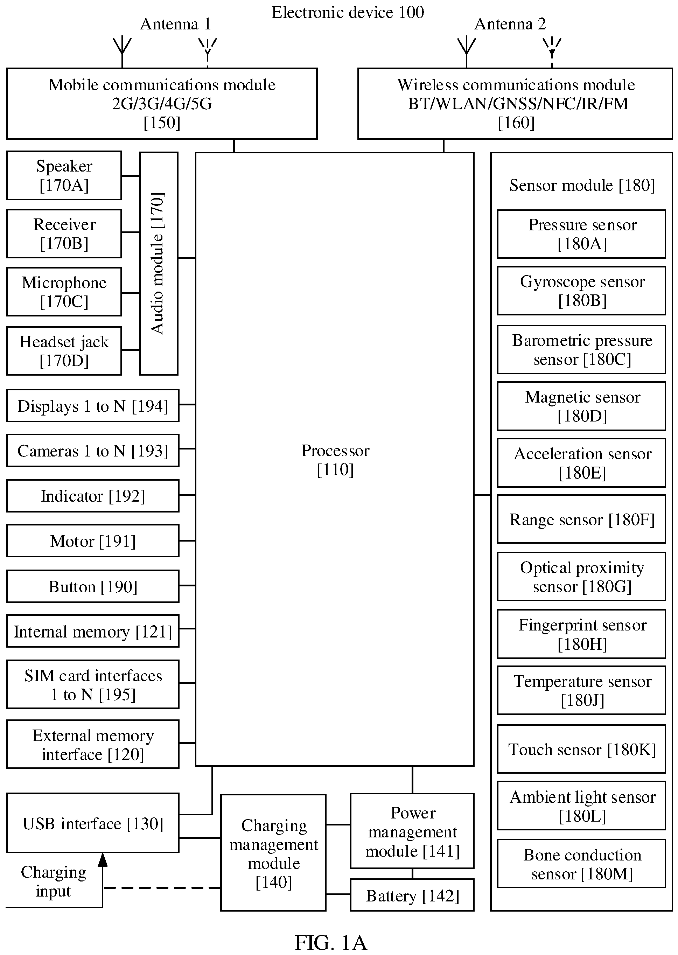

A split-screen display processing method according to an embodiment of this application may be applied to the electronic device 100 shown in FIG. 1A. The electronic device 100 shown in FIG. 1A may be a portable electronic device that further includes another function such as a personal digital assistant function and/or a music player function, for example, a mobile phone, a tablet computer, or a wearable device (for example, a smart watch) having a wireless communication function. The portable electronic device is, for example, a laptop computer having a touch panel.

As shown in FIG. 1A, the following uses the electronic device 100 as an example to describe this embodiment in detail.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent devices, or may be integrated into one or more processors.

The controller may generate an operation control signal based on instruction operation code and a time sequence signal, to control instruction fetching and instruction execution.

A memory may be further disposed in the processor 110, and is configured to store a computer program and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The USB interface 130 is an interface that conforms to USB standard specifications, and may be specifically a mini USB interface, a micro USB interface, a USB Type-C interface, or the like. The USB interface 130 may be configured to connect to the charger to charge the electronic device 100, or may be configured to perform data transmission between the electronic device 100 and a peripheral device, or may be configured to connect to a headset to play audio by using the headset, or may be configured to connect to another electronic device such as an AR device.

It may be understood that an interface connection relationship between the modules in this embodiment of this application is merely an example for description, and does not constitute a limitation on the structure of the electronic device 100. In some other embodiments of this application, the electronic device 100 may alternatively use an interface connection manner different from that in the foregoing embodiment, or may use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device 100 by using the power management module 141 while charging the battery 142.

The power management module 141 is configured to connect the battery 142 and the charging management module 140 to the processor 110. The power management module 141 receives an input of the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 can provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules in the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another function module.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. In this embodiment, the display 194 is a curved display or a foldable display.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, and the computer-executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the electronic device 100 is used. In addition, the internal memory 121 may include a high-speed random access memory, or may include a nonvolatile memory such as at least one disk storage device, a flash memory, or a universal flash storage (universal flash storage, UFS). The processor 110 runs instructions stored in the internal memory 121 and/or instructions stored in the memory disposed in the processor, to perform various function applications of the electronic device 100 and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may listen to music or answer a call in a hands-free mode by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound near the microphone 170C through the mouth of the user, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure strength based on the change of the capacitance. When a touch operation is performed on the display 194, the electronic device 100 detects strength of the touch operation by using the pressure sensor 180A. The electronic device 100 may also calculate a touch location based on a detection signal of the pressure sensor 180A. In some embodiments, touch operations that are performed at a same touch location but have different touch operation strength may correspond to different operation instructions. For example, when a touch operation whose touch operation strength is less than a first pressure threshold is performed on an icon of Messages, an instruction for viewing an SMS message is performed. When a touch operation whose touch operation strength is greater than or equal to the first pressure threshold is performed on the icon of Messages, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a motion-controlled gaming scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor 180E may be further configured to identify a posture of the electronic device 100, and is applied to an application such as switching between a landscape mode and a portrait mode or a pedometer.

The range sensor 180F is configured to measure a distance. The electronic device 100 may measure a distance in an infrared or a laser manner. In some embodiments, in a photographing scenario, the electronic device 100 may measure a distance by using the range sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is compatible with different types of SIM cards. The SIM card interface 195 is also compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

The electronic device 100 shown in FIG. 1A as an example may display, by using the display 194, user interfaces described in the following embodiments. The electronic device 100 may detect a touch operation on each user interface by using the touch sensor 180K, for example, a tap operation (for example, a touch operation or a double-tap operation performed on an icon) on each user interface, or a slide-up or slide-down operation or a circle drawing gesture operation on each user interface. In some embodiments, the electronic device 100 may detect, by using the gyroscope sensor 180B, the acceleration sensor 180E, or the like, a motion gesture made by the user by holding the electronic device 10, for example, shaking of the electronic device. In some embodiments, the electronic device 100 may detect a non-touch gesture operation by using the 3D camera module 193 (for example, a 3D camera or a depth camera).

A software system of the electronic device 100 may use a layered architecture, an event-driven architecture, a microkernel architecture, a micro service architecture, or a cloud architecture. In this embodiment of this application, an Android system of a layered architecture is used as an example to illustrate the software structure of the electronic device 100.

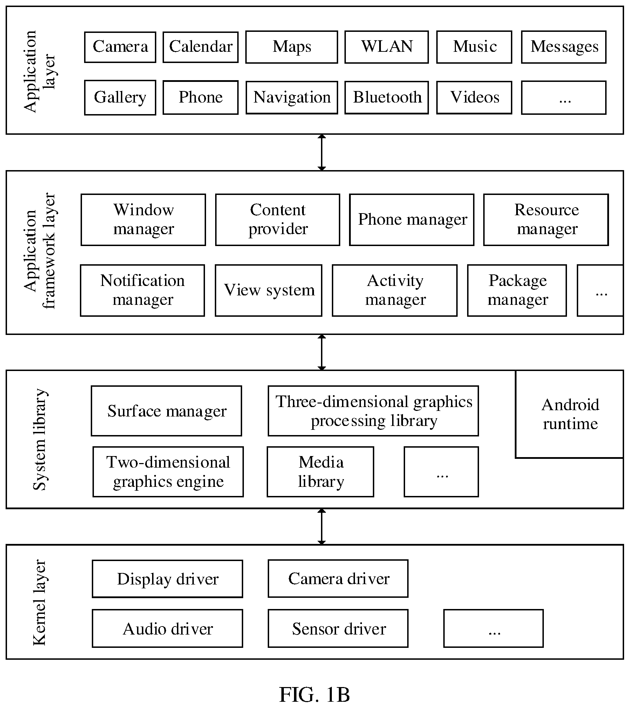

FIG. 1B is a block diagram of the software structure of the electronic device 100 according to this embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 1B, the application packages may include applications such as Camera, Gallery, Calendar, Phone, Maps, Navigation, WLAN, Bluetooth, Music, Videos, and Messages. The application is responsible for direct interaction with a user.

The application framework layer provides an application programming interface (application programming interface, API) and a programming framework for an application at the application layer. The application framework layer includes some predefined functions.

As shown in FIG. 1B, the application framework layer may include a window manager (Window Manager), a content provider (Content Provider), a view system (View System), a phone manager (Telephony Manager), a resource manager (Resource Manager), a notification manager (Notification Manager), an activity manager (Activity Manager), a package manager (Package Manager), and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history and a bookmark, a phone book, and the like.

The view system includes visual controls, such as a control for displaying a text and a control for displaying a photo. The view system may be configured to construct an application. A display interface may include one or more views. For example, a display interface including an SMS message notification icon may include a text display view and a photo display view.

The phone manager is configured to provide a communication function for the electronic device 100, for example, management of a call status (including answering, declining, or the like).

The resource manager provides various resources such as a localized character string, an icon, a photo, a layout file, and a video file for an application.

The notification manager enables an application to display notification information in a status bar, and may be configured to convey a notification type message. The displayed notification information may automatically disappear after a short pause and require no user interaction. For example, the notification manager is configured to notify download completion, give a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is prompted in the status bar, an alert sound is played, the electronic device vibrates, or the indicator light blinks.

The package manager is configured to manage an attribute of a parsing package, so as to determine whether an application supports multi-window display and split-screen display. The package manager is an API that actually manages installation, uninstallation, and upgrade of an application.

The activity manager is configured to manage a life cycle of each application and manage an activity, a task, and a stack.

The package manager is configured to manage parsing packages of all applications installed in the Android system, and may determine, by using a parsing package attribute of an application in the package manager, whether the application supports multi-window display, that is, split-screen display. Optionally, a multi-window application whitelist mechanism may be added to the package manager, to force an application in a whitelist to support multi-window display.

It may be understood that, when an application starts or exits split-screen display, the activity manager determines, based on an attribute of a parsing package in the package manager, that the application supports multi-window display. If yes, the activity manager sends a split-screen instruction to the window manager, and the window manager controls the display to enable a split-screen display function.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, G.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes examples of working procedures of software and hardware of the electronic device 100 with reference to a photographing capture scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, the camera driver is started by invoking the kernel layer, and a static image or a video is captured by using the camera 193.

The following describes an example user interface that is on the electronic device 100 and that is used for an application menu.

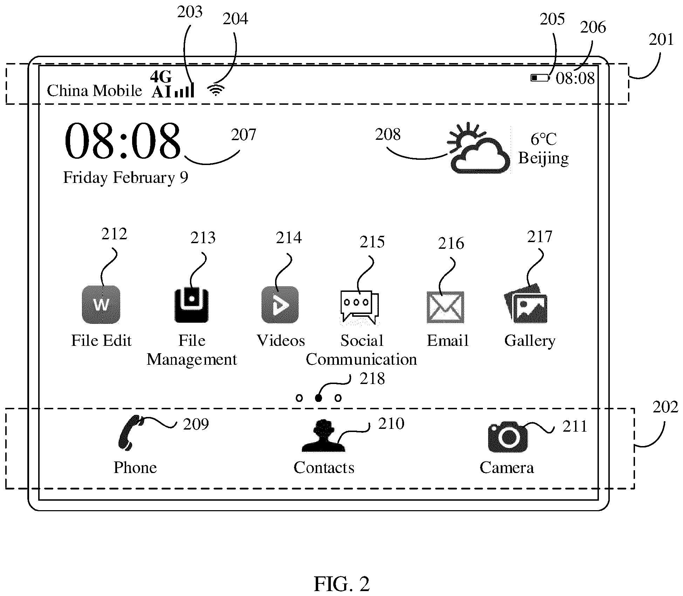

FIG. 2 is an example of a schematic diagram of an interface of an application menu that is displayed when the electronic device 100 is in an expanded state.

As shown in FIG. 2, the user interface may include a status bar 201, a tray 202 with icons of commonly used applications, a calendar widget 207, a weather widget 208, and other application icons. The status bar 201 may include one or more signal strength indicators 203 of a mobile communication signal (which may also be referred to as a cellular signal), one or more signal strength indicators 204 of a wireless fidelity (wireless fidelity, Wi-Fi) signal, a battery status indicator 205, and a time indicator 206.

The calendar widget 207 may be used to indicate a current time, for example, a date, a day of a week, and hour-minute information.

The weather widget 208 may be used to indicate a weather type, for example, cloudy to sunny, or light rain, or may be used to indicate information such as a temperature.

The tray 202 with icons of commonly used applications may display an icon 209 of Phone, an icon 210 of Contacts, and an icon 211 of Camera.

The other application icons may be, for example, an icon 212 of a file edit application, an icon 213 of a file management application, an icon 214 of a video application, an icon 215 of a social communication application, an icon 216 of an email application, and an icon 217 of a gallery application. The social communication application may be, for example, WeChat, QQ, Twitter (Twitter), or Facebook (Facebook).

The user interface may further include an interface indicator 218. The other application icons may be distributed on another interface. The interface indicator 218 may be used to indicate a quantity of interfaces and a specific interface currently browsed by a user. For example, if the interface indicator 218 displays three small dots, the second small dot is black, and the other small dot is white, it indicates that the mobile phone currently includes three interfaces and the user is browsing the second interface. In addition, the user may slide leftward or rightward on a current interface to browse an application icon on another page.

It may be understood that FIG. 2 merely shows an example of the user interface on the electronic device 100, and should not constitute a limitation on this embodiment of this application.

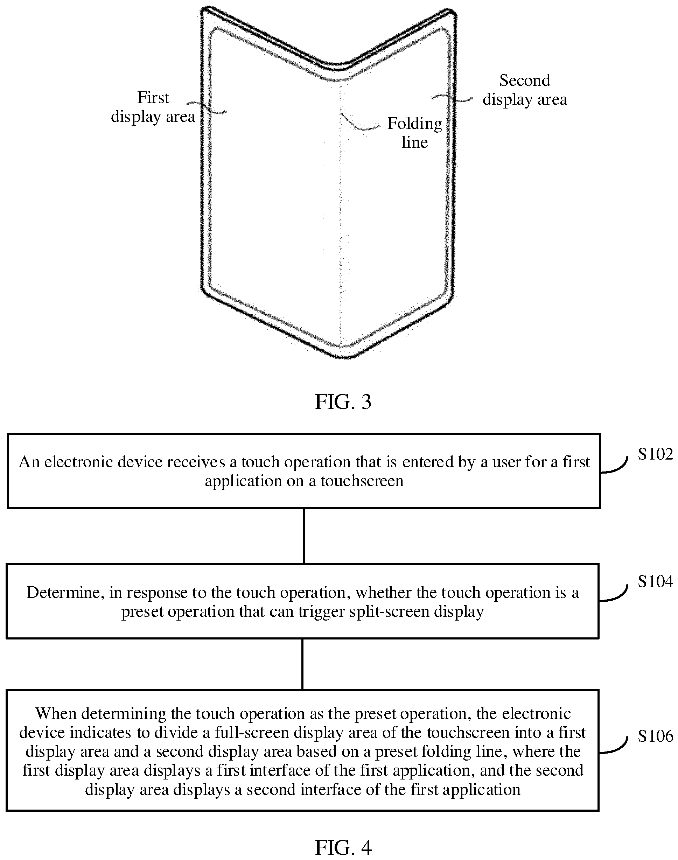

FIG. 3 is an example of a schematic diagram in which the electronic device 100 is in a folded state. As shown in FIG. 3, the display 194 of the electronic device 100 is a foldable screen. By folding the electronic device, the display 194 may be divided into two parts along a folding line: a first display area and a second display area. Herein, "folding" means that the display may be bent to any angle at any part and may maintain the angle. For example, the display 194 may be folded leftward or rightward in the middle. In another implementation, the display may be alternatively folded upward or downward in the middle.

The foldable display 194 may include at least two physical statuses: an expanded state and a folded state.

Generally, when the electronic device is in a folded state, a full-screen display area of the electronic device is automatically divided into a first display area and a second display area. When the electronic device is in an expanded state, the electronic device generally presents full-screen display. However, when some applications are used, split-screen display is required even if the electronic device is in an expanded state, so as to improve user operation convenience and user experience.

FIG. 4 is a schematic flowchart of a split-screen display processing method according to an embodiment of this application. As shown in FIG. 4, the split-screen display processing method provided in this application is applied to an electronic device including a foldable touchscreen, the touchscreen is in an expanded state, and the method includes the following steps:

Step S102: The electronic device receives a touch operation that is entered by a user for a first application on the touchscreen.

Step S104: Determine, in response to the touch operation, whether the touch operation is a preset operation that can trigger split-screen display.

Step S106: When determining the touch operation as the preset operation, the electronic device indicates to divide a full-screen display area of the touchscreen into a first display area and a second display area based on a preset folding line, where the first display area displays a first interface of the first application, and the second display area displays a second interface of the first application.

In this embodiment of this application, the electronic device determines whether the touch operation related to the first application is the preset operation that can trigger split-screen display. When the touch operation is the preset operation, the electronic device directly indicates the touchscreen to enable split-screen display, so that the first interface of the first application is displayed in the first display area, and the second interface of the first application is displayed in the second display area. In this manner, the electronic device can quickly enter a split-screen display mode based on a user usage scenario. This resolves a problem of poor user experience caused by a current rigid split-screen display mode.

In some implementations, when developing an application, development and design personnel need to set a usage scenario that requires split-screen display. For example, an operation that triggers split-screen display is stored in a parsing package attribute of the application by using a tag or in another definition manner. An operation definition manner is not limited herein in this application.

In an implementation, after step S102, the method further includes:

The electronic device determines whether the first application supports split-screen display.

If yes, the electronic device performs step S104 of determining, in response to the touch operation, whether the touch operation is a preset operation that can trigger split-screen display.

In an implementation, a multi-window application whitelist mechanism is created. When an enabled application is in a whitelist, it indicates that the application supports multi-window display, in other words, can support split-screen display. The whitelist mechanism may be defined in a parsing package of an application.

Alternatively, if an enabled application is not in a whitelist, a UI interaction entry may be provided for the user to query the user whether to add the application to the whitelist, and then the whitelist of the application is updated based on a user operation.

Optionally, when the touchscreen of the electronic device is in a folded state, the electronic device automatically hides an interface of an application in the second display area, and retains only an interface displayed in the first display area.

When the electronic device is in a split-screen display state, and the user disables one display interface by using a touch instruction, the other display area is automatically switched to a full-screen display state.

The following explains this solution with reference to some scenarios to which this application is applicable.

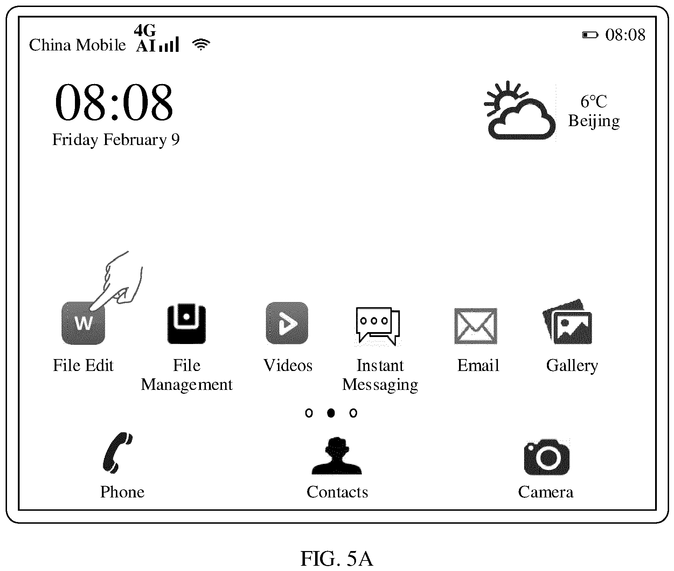

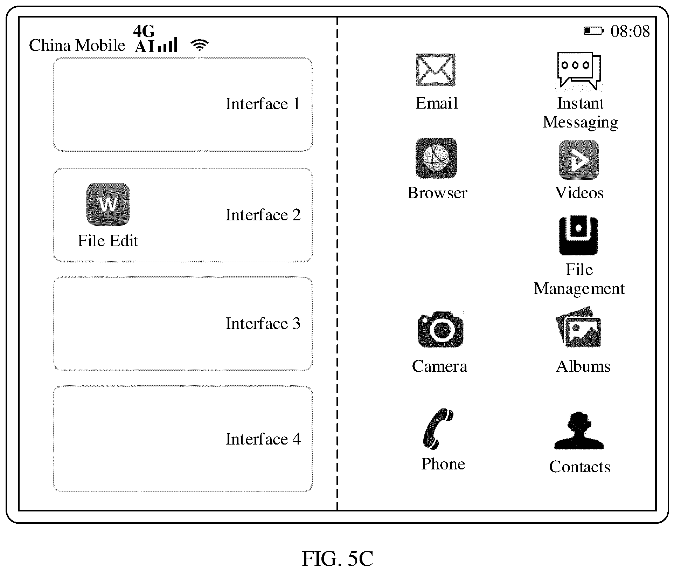

FIG. 5A to FIG. 5C show examples of schematic diagrams of some user interfaces used for split-screen display.

As shown in FIG. 5A, the first application is a desktop application, and the electronic device receives a touch operation that is entered by the user for the desktop application, and a touch parameter (for example, press duration that exceeds 2s) of the touch operation. When the electronic device determines that the touch operation is a preset operation used to indicate to move an application icon (for example, an icon of "File Edit") on a desktop, the electronic device indicates the touchscreen to display a first interface of the desktop application in the first display area. The first interface is a display interface of a plurality of interfaces on the desktop. The electronic device indicates the touchscreen to display a second interface of the desktop management application in the second display area. The second interface is an interface on which the to-be-moved application icon is located.

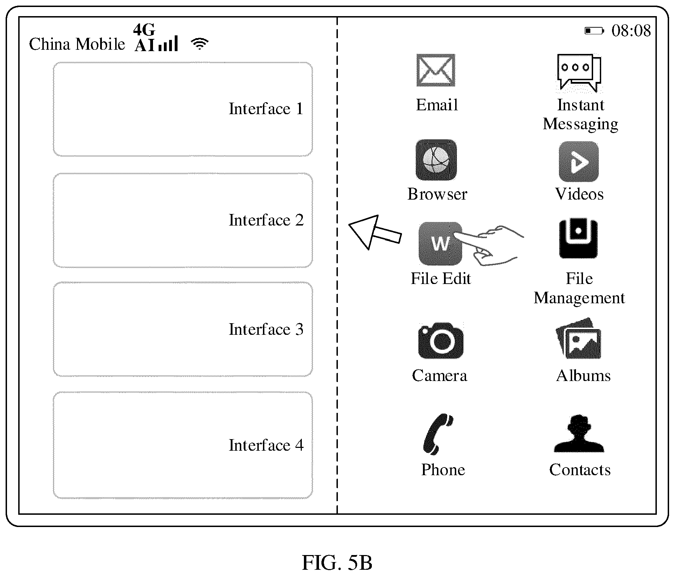

As shown in FIG. 5B, after the user presses the icon of "File Edit" for 2s, the screen is automatically split into the first display area and the second display area, and the icon of "File Edit" on the second interface may be dragged. The user may drag the icon to an interface 2, and then release the icon of the file edit application, so as to implement quick moving of the file edit application. Certainly, the icon of "File Edit" may alternatively be dragged to an interface 1, an interface 3, an interface 4, or the like. It may be understood that split-screen display improves application moving efficiency.

It should be noted that the touch operation is not limited to the gesture and the operation in the example shown in FIG. 5B, and may be another operation used to trigger split-screen display of the electronic device. This is not specifically limited in this embodiment.

In this embodiment, during split-screen display, the user may perform a corresponding operation in a display area obtained through division by the electronic device, to trigger the electronic device to execute a corresponding event for an application displayed in the display area.

Optionally, a type of the touch operation is a touch and hold operation, a slide operation, or a tap operation. It should be noted that the touch operation may alternatively be another operation used to trigger the electronic device to execute a back event for an application displayed in a corresponding display area, for example, a double-tap operation in the first display area. This is not specifically limited in this embodiment. In addition, there may be one or more fingers for performing the touch operation. This is not specifically limited in this embodiment either.

In an implementation, the user may disable either of the first interface and the second interface by performing a preset second touch operation. When one interface is disabled, the other interface automatically enters a full-screen display mode. For example, the second touch operation is a slide operation, a start point of the slide operation is a bottom edge of the first display area or the second display area, a slide direction is being away from the bottom edge, and duration is greater than preset duration.

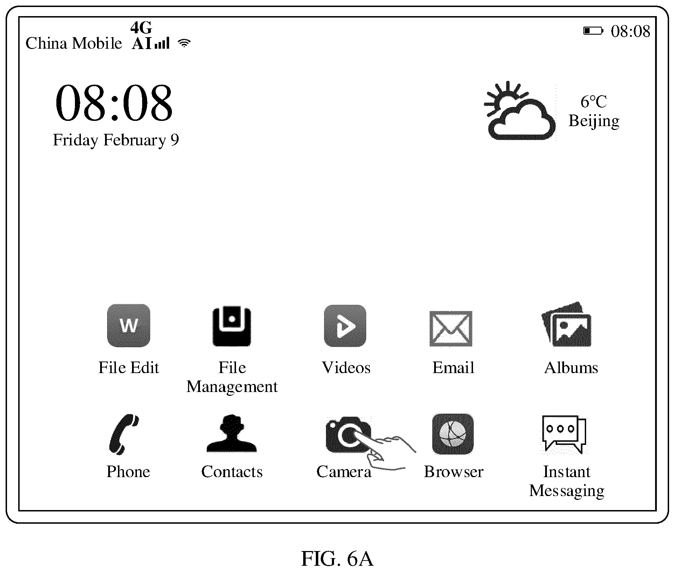

FIG. 6A to FIG. 6C show examples of schematic diagrams of some user interfaces used for split-screen display.

As shown in the figure, the first application is a camera application, and the electronic device receives a touch operation that is entered by the user for the camera application. When the electronic device determines that the touch operation is a preset operation used to indicate to start photographing or complete photographing, the electronic device indicates the touchscreen to display a first interface of the camera application in the first display area. The first interface is a photographing interface. The electronic device indicates the touchscreen to display a second interface of the camera application in the second display area. The second interface is a photo interface.

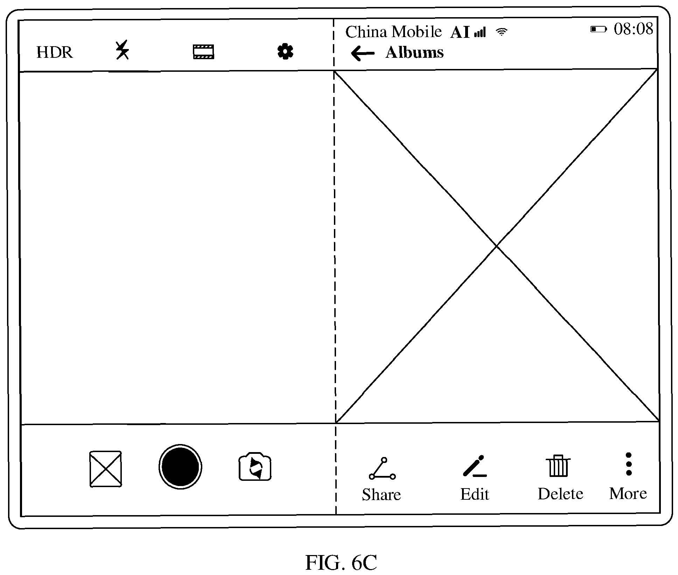

In an implementation, as shown in FIG. 6A, the user taps an icon of the camera application. When a camera is enabled, the electronic device automatically performs split-screen display, and the display area of the touchscreen is switched to the first display area and the second display area shown in FIG. 6C.

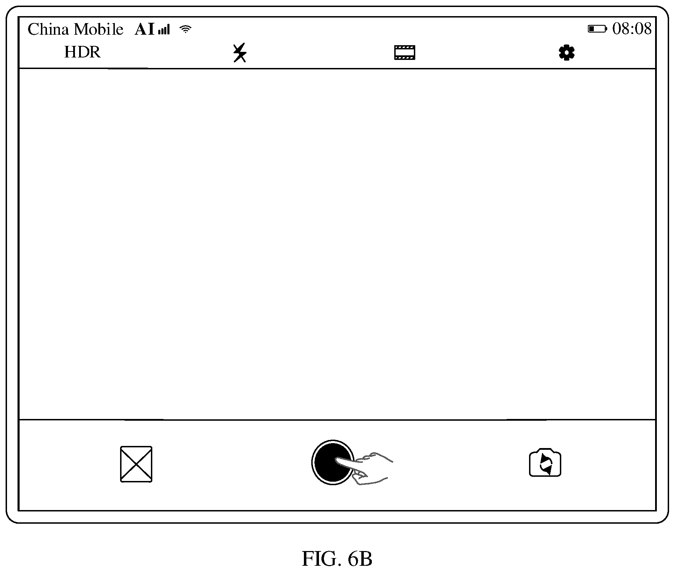

In another implementation, as shown in FIG. 6B, after enabling the camera application, the user taps a photographing button. When the camera completes photographing, the electronic device automatically performs split-screen display.

It may be understood that the electronic device can quickly switch to split-screen display based on a user usage scenario without a need of entering another split-screen instruction by the user, and a photo that has just been taken is displayed in the second display area, so that the user can view an effect of the taken photo while continuing photographing. This improves user experience.

When the user does not need split-screen display, the user may disable one interface by performing a slide operation.

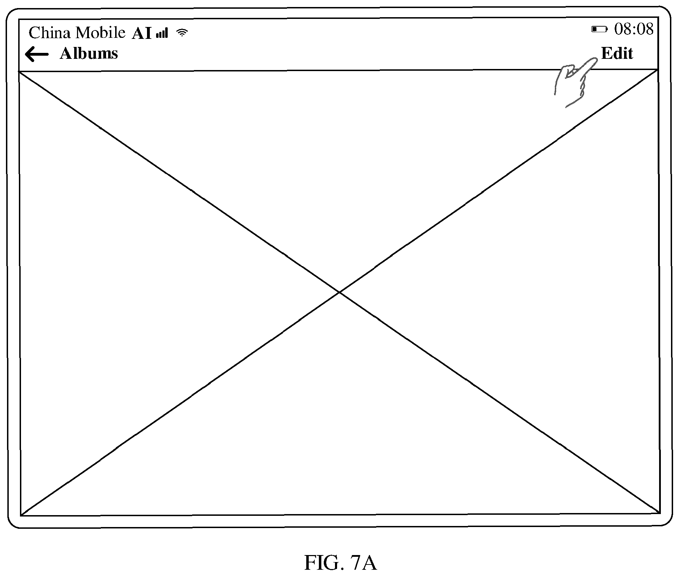

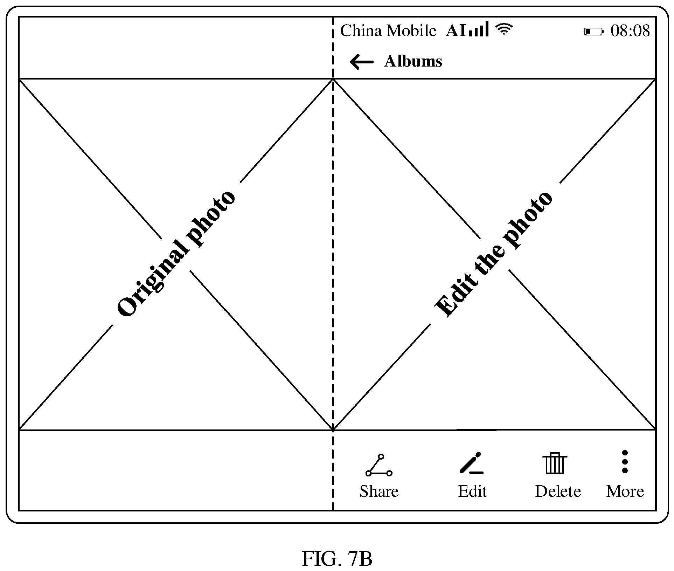

FIG. 7A and FIG. 7B show examples of schematic diagrams of some user interfaces used for split-screen display.

As shown in FIG. 7A, the first application is a gallery application, and the electronic device receives a touch operation that is entered by the user for the gallery application. When the electronic device determines that the touch operation is a preset operation used to indicate to edit a photo in a gallery, the electronic device indicates the touchscreen to display a first interface of the gallery application in the first display area. The first interface is an original photo state display interface. The electronic device indicates the touchscreen to display a second interface of the gallery application in the second display area. The second interface is a photo editing state display interface.

It may be understood that, when enabling the gallery application, the user slides leftward or rightward on the touchscreen to browse a photo in the gallery. When a photo needs to be edited, a touch operation of tapping an "Edit" button is the preset operation, and the electronic device automatically performs split-screen display. The first display area displays an original photo for reference and comparison during editing. The second display area is used to edit a photo. The electronic device quickly switches to split-screen display based on a user usage scenario without a need of entering another split-screen instruction by the user. This helps the user intuitively view an editing effect, and improves user experience.

Optionally, as shown in FIG. 7B, after editing the photo in the second display area, the user may directly perform operations such as saving, deleting, and sharing.

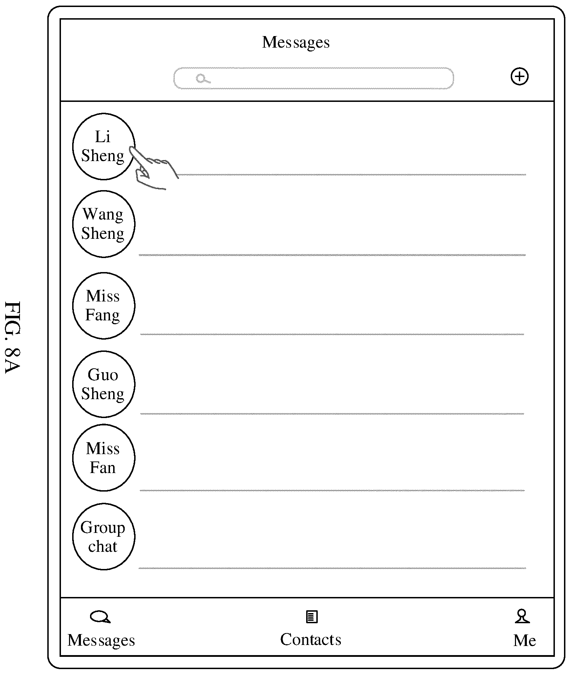

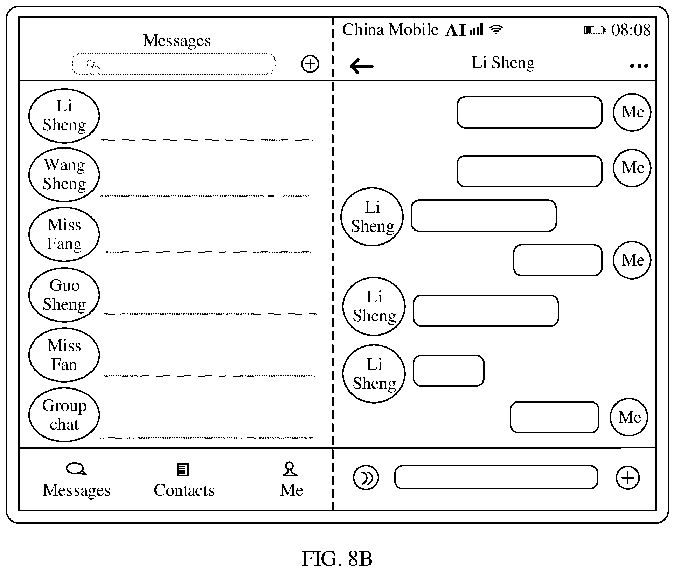

FIG. 8A and FIG. 8B show examples of schematic diagrams of some user interfaces used for split-screen display.

As shown in FIG. 8A, the first application is a social application, and the electronic device receives a touch operation that is entered by the user for the social application (for example, WeChat). When the electronic device determines that the touch operation is a preset operation used to indicate to start chatting, the electronic device indicates the touchscreen to display a first interface of the social application in the first display area. The first interface is a message prompt interface. The electronic device indicates the touchscreen to display a second interface of the camera application in the second display area. The second interface is a chatting interface.

It may be understood that, when the user uses the social application in full screen, and the user selects a chatting object by performing a touch operation, the electronic device automatically performs split-screen display. The electronic device quickly switches to split-screen display based on a user usage scenario without a need of entering another split-screen instruction. This improves user experience.

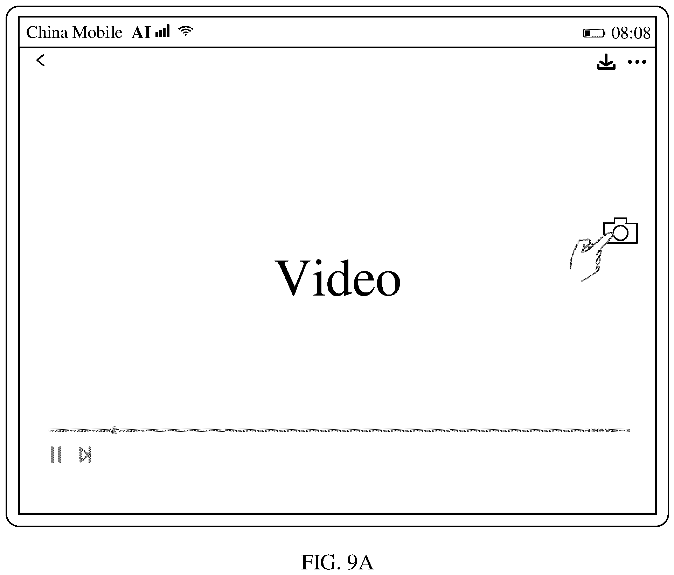

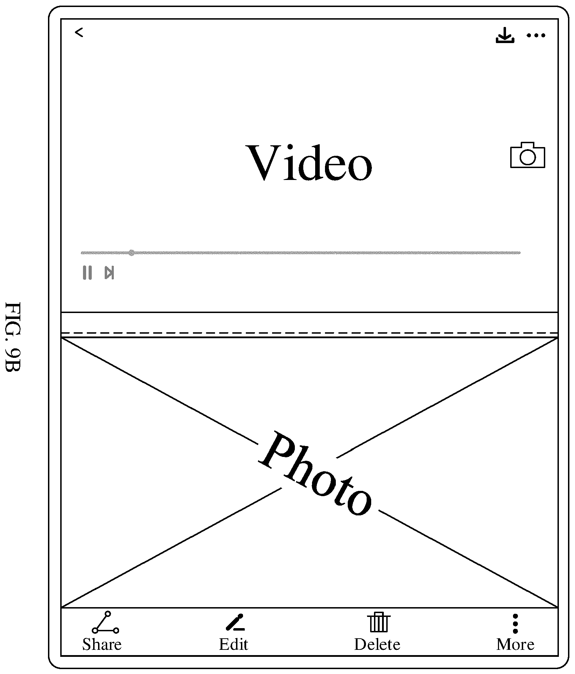

FIG. 9A and FIG. 9B show examples of schematic diagrams of some user interfaces used for split-screen display.

As shown in FIG. 9A, the first application is a video application, and the electronic device receives a touch operation that is entered by the user for the video application (for example, multimedia video software such as iQIYI, Tencent Video, or Huawei Video). When the electronic device determines that the touch operation is a preset operation used to indicate to take a screenshot, the electronic device indicates the touchscreen to display a first interface of the video application in the first display area. The first interface is a video playing interface. The electronic device indicates the touchscreen to display a second interface of the video application in the second display area. The second interface is a screenshot display interface.

It may be understood that, when the user watches a video in full screen, if the user wants to retain a frame of photo in the video, the user taps a "Screenshot" button on the video playing interface, so that the electronic device automatically performs split-screen display. As shown in FIG. 9B, the electronic device quickly switches to split-screen display based on a user usage scenario without a need of entering another split-screen instruction, so that the user can edit a video screenshot while watching a video. This improves user experience.

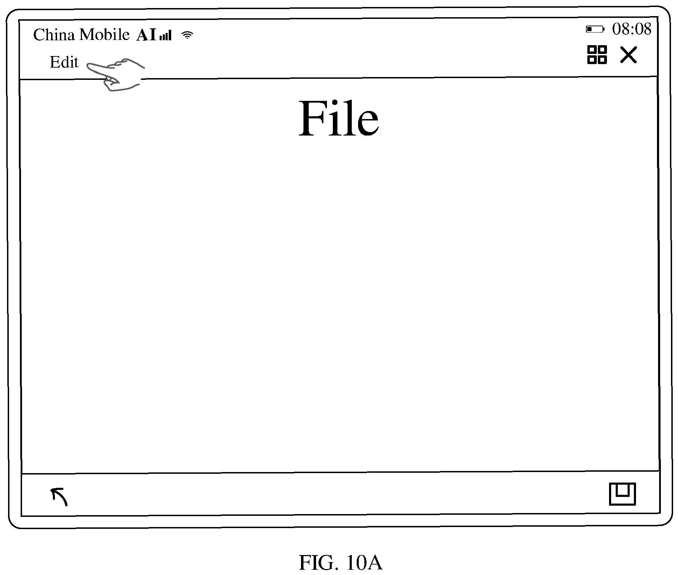

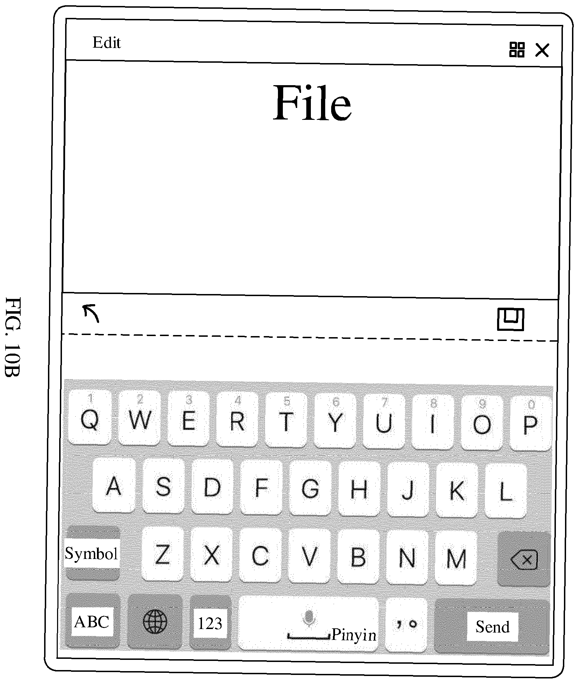

FIG. 10A and FIG. 10B show examples of schematic diagrams of some user interfaces used for split-screen display.

As shown in FIG. 10A, the first application includes a file edit application, and the electronic device receives a touch operation that is entered by the user for the file edit application (for example, a file edit application such as WPS, Memo, or Notepad). When the preset operation is an operation used to indicate to start editing, that the electronic device indicates to divide a full-screen display area of the touchscreen into a first display area and a second display area based on a preset folding line includes:

The electronic device indicates the touchscreen to display a first interface of the file edit application in the first display area. The first interface is a file display interface. The electronic device indicates the touchscreen to display a second interface of the file edit application in the second display area. The second interface is a keyboard input interface.

It may be understood that, when the user needs to edit a file, the user taps an "Edit" button on the file display interface, so that the electronic device automatically performs split-screen display. As shown in FIG. 10B, the electronic device quickly switches to split-screen display based on a user usage scenario without a need of entering another split-screen instruction. This improves user experience, and helps the user quickly perform an edit operation.

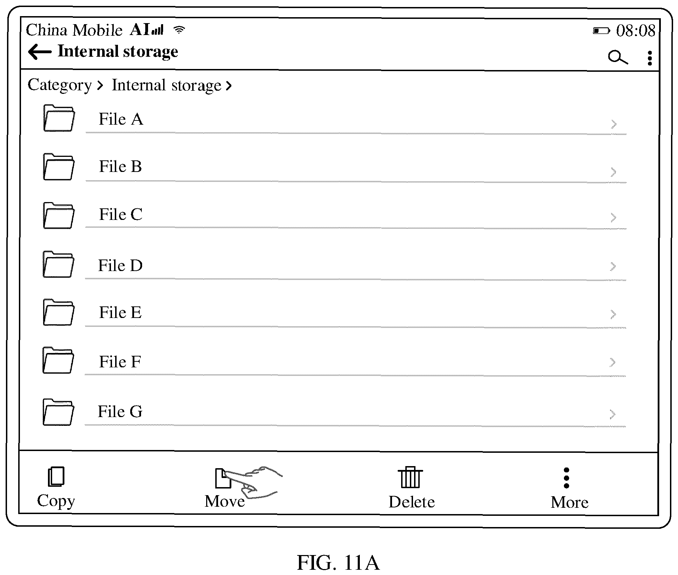

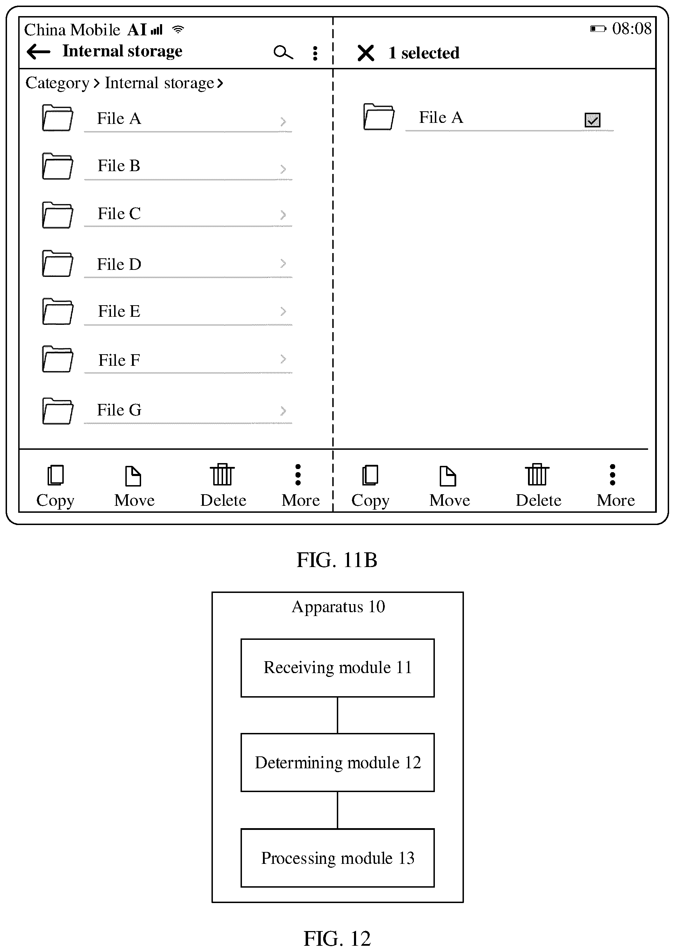

FIG. 11A and FIG. 11B show examples of schematic diagrams of some user interfaces used for split-screen display.

As shown in FIG. 11A, the first application includes a file management application, and the electronic device receives a touch operation that is entered by the user for the file management application. A file type includes a folder, a file, a compressed file, a photo, a video, music, and the like. When the preset operation is an operation used to indicate to copy or move a file, that the electronic device indicates to divide a full-screen display area of the touchscreen into a first display area and a second display area based on a preset folding line includes:

The electronic device indicates the touchscreen to display a first interface of the file management application in the first display area. The first interface is a file storage path interface. The electronic device indicates the touchscreen to display a second interface of the file management application in the second display area. The second interface is a selected-file display interface.

It may be understood that, when the user needs to move or copy a file, the user presses an icon of the file on the file storage path interface, so that the electronic device automatically performs split-screen display. As shown in FIG. 11B, the electronic device quickly switches to split-screen display based on a user usage scenario without a need of entering another split-screen instruction. Through split-screen display, the user can find an expected storage path in the first display area. This improves copying or moving efficiency, and improves user experience.

Optionally, after the electronic device determines, in response to the touch operation, whether the touch operation is the preset operation that can trigger split-screen display, the method further includes:

If no, the electronic device maintains current full-screen display of the touchscreen.

It may be understood that split-screen display can be triggered only when the touch operation is determined as the preset operation. Otherwise, split-screen display cannot be triggered, and full-screen display is maintained.

FIG. 12 is a schematic diagram of a structure of a split-screen display processing apparatus according to this application. As shown in FIG. 12, the split-screen display processing apparatus 10 includes a receiving module 11, a determining module 12, and a processing module 13.

The receiving module 11 is configured to receive a touch operation that is entered by a user for a first application on a touchscreen.

The determining module 12 is configured to determine, in response to the touch operation, whether the touch operation is a preset operation that can trigger split-screen display.

The processing module 13 is configured to: when the touch operation is determined as the preset operation, indicate to divide a full-screen display area of the touchscreen into a first display area and a second display area based on a preset folding line, where the first display area displays a first interface of the first application, and the second display area displays a second interface of the first application.

In this embodiment of this application, the electronic device determines whether the touch operation related to the first application is the preset operation that can trigger split-screen display. When the touch operation is the preset operation, the electronic device directly indicates the touchscreen to enable split-screen display, so that the first interface of the first application is displayed in the first display area, and the second interface of the first application is displayed in the second display area. In this manner, the electronic device can quickly enter a split-screen display mode based on a user usage scenario. This resolves a problem of poor user experience caused by a current rigid split-screen display mode.

The split-screen display processing method provided in this embodiment is used to perform the technical solutions in the foregoing method embodiment. Implementation principles and technical effects thereof are similar. Details are not described herein again.

This application further provides an electronic device. As shown in FIG. 1A, the electronic device 100 includes the memory 121, the at least one processor 110, and a touchscreen. The touchscreen is the foldable touch display 194; and the memory is coupled to the one or more processors, the memory 121 is configured to store computer program code, the computer program code includes computer instructions, and when the one or more processors 110 execute the computer instructions, the electronic device 100 is enabled to perform the foregoing split-screen display processing method.

This application further provides a computer-readable storage medium, including instructions. When the instructions are run on an electronic device, the electronic device is enabled to perform the foregoing split-screen display processing method.

This application further provides a computer program product. When the computer program product runs on a computer, the computer is enabled to perform the foregoing split-screen display processing method.

Persons skilled in the art may clearly understand that, for convenient and brief description, for detailed working processes of the foregoing system, apparatus, and unit, refer to corresponding processes in the foregoing method embodiment. Details are not described herein again.

In several embodiments provided in this application, it should be understood that the disclosed system, apparatus, and method may be implemented in another manner. For example, the described apparatus embodiment is merely an example. For example, module or unit division is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one position, or may be distributed on a plurality of different positions. Some or all of the units may be selected according to actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of this application essentially, or the part contributing to the conventional technology, or all or some of the technical solutions may be implemented in a form of a software product. The software product is stored in a storage medium, and includes several instructions to enable a device (which may be a single-chip microcomputer, a chip or the like) or a processor (processor) to perform all or some of the steps of the method described in embodiments of this application. The storage medium includes any medium that can store program code, such as a USB flash drive, a removable hard disk, a read-only memory (Read-Only Memory, ROM), a random access memory

(Random Access Memory, RAM), a magnetic disk, or a compact disc.

The foregoing descriptions are merely specific implementations of this application. Any variation or replacement readily figured out by persons skilled in the art within the technical scope disclosed in this application shall fall within the protection scope of this application. The protection scope of this application shall be subject to the protection scope of the claims.

## Claims

1. A split-screen display processing method, wherein the method is applied to an electronic device comprising a foldable touchscreen, the touchscreen is in an expanded state, and the method comprises:
receiving, by the electronic device, a touch operation that is entered by a user for a first application on the touchscreen;
determining, in response to the touch operation, whether the touch operation is a preset operation that can trigger split-screen display; and
when determining the touch operation as the preset operation, indicating, by the electronic device, to divide a full-screen display area of the touchscreen into a first display area and a second display area based on a preset folding line, wherein the first display area displays a first interface of the first application, and the second display area displays a second interface of the first application.

2. The method according to claim 1, wherein the first application comprises a desktop application, and the preset operation is an operation used to indicate to move an application on a desktop; and the indicating, by the electronic device, to divide a full-screen display area of the touchscreen into a first display area and a second display area based on a preset folding line comprises:
indicating, by the electronic device, the touchscreen to display a first interface of the desktop application in the first display area, wherein the first interface is a display interface of a plurality of interfaces on the desktop; and
indicating, by the electronic device, the touchscreen to display a second interface of the desktop application in the second display area, wherein the second interface is an interface on which the to-be-moved application is located.

3. The method according to claim 1, wherein the first application comprises a camera application, and the preset operation is an operation used to indicate to start photographing or complete photographing; and the indicating, by the electronic device, to divide a full-screen display area of the touchscreen into a first display area and a second display area based on a preset folding line comprises:
indicating, by the electronic device, the touchscreen to display a first interface of the camera application in the first display area, wherein the first interface is a photographing interface; and
indicating, by the electronic device, the touchscreen to display a second interface of the camera application in the second display area, wherein the second interface is a photo interface.

4. The method according to claim 1, wherein the first application comprises a gallery application, and the preset operation is an operation used to indicate to edit a photo in a gallery; and the indicating, by the electronic device, to divide a full-screen display area of the touchscreen into a first display area and a second display area based on a preset folding line comprises:
indicating, by the electronic device, the touchscreen to display a first interface of the gallery application in the first display area, wherein the first interface is an original photo state display interface; and
indicating, by the electronic device, the touchscreen to display a second interface of the gallery application in the second display area, wherein the second interface is a photo editing state display interface.

5. The method according to claim 1, wherein the first application comprises a social application, and the preset operation is an operation used to indicate to start chatting; and the indicating, by the electronic device, to divide a full-screen display area of the touchscreen into a first display area and a second display area based on a preset folding line comprises:
indicating, by the electronic device, the touchscreen to display a first interface of the social application in the first display area, wherein the first interface is a message prompt interface; and
indicating, by the electronic device, the touchscreen to display a second interface of the social application in the second display area, wherein the second interface is a chatting interface.

6. The method according to claim 1, wherein the first application comprises a video application, and the preset operation is an operation used to indicate to take a screenshot; and the indicating, by the electronic device, to divide a full-screen display area of the touchscreen into a first display area and a second display area based on a preset folding line comprises:
indicating, by the electronic device, the touchscreen to display a first interface of the video application in the first display area, wherein the first interface is a video playing interface; and
indicating, by the electronic device, the touchscreen to display a second interface of the video application in the second display area, wherein the second interface is a screenshot display interface.

7. The method according to claim 1, wherein the first application comprises a file edit application, and the preset operation is an operation used to indicate to start editing; and the indicating, by the electronic device, to divide a full-screen display area of the touchscreen into a first display area and a second display area based on a preset folding line comprises:
indicating, by the electronic device, the touchscreen to display a first interface of the file edit application in the first display area, wherein the first interface is a file display interface; and
indicating, by the electronic device, the touchscreen to display a second interface of the file edit application in the second display area, wherein the second interface is a keyboard input interface.

8. The method according to claim 1, wherein the first application comprises a file management application, and the preset operation is an operation used to indicate to copy or move a file; and the indicating, by the electronic device, to divide a full-screen display area of the touchscreen into a first display area and a second display area based on a preset folding line comprises:
indicating, by the electronic device, the touchscreen to display a first interface of the file management application in the first display area, wherein the first interface is a file storage path interface; and
indicating, by the electronic device, the touchscreen to display a second interface of the file management application in the second display area, wherein the second interface is a selected-file display interface.

9. The method according to claim 1, wherein after the receiving a touch operation that is entered by a user for a first application on the touchscreen, the method further comprises:
determining, by the electronic device, whether the first application supports split-screen display; and
if yes, determining, in response to the touch operation, whether the touch operation is the preset operation that can trigger split-screen display.

10. The method according to claim 1, wherein a type of the touch operation is a touch and hold operation, a slide operation, or a tap operation.

11. A split-screen display processing apparatus, wherein the apparatus comprises:
a receiving module, configured to receive a touch operation that is entered by a user for a first application on a touchscreen;
a determining module, configured to determine, in response to the touch operation, whether the touch operation is a preset operation that can trigger split-screen display; and
a processing module, configured to: when the touch operation is determined as the preset operation, indicate to divide a full-screen display area of the touchscreen into a first display area and a second display area based on a preset folding line, wherein the first display area displays a first interface of the first application, and the second display area displays a second interface of the first application.

12. An electronic device, wherein the electronic device comprises a memory, at least one processor, and a touchscreen, wherein the touchscreen is a foldable touch display; and the memory is coupled to the one or more processors, the memory is configured to store computer program code, the computer program code comprises computer instructions, and when the one or more processors execute the computer instructions, the electronic device is enabled to perform the following operations:
receiving, by the electronic device, a touch operation that is entered by a user for a first application on the touchscreen;
determining, in response to the touch operation, whether the touch operation is a preset operation that can trigger split-screen display; and
when determining the touch operation as the preset operation, indicating, by the electronic device, to divide a full-screen display area of the touchscreen into a first display area and a second display area based on a preset folding line, wherein the first display area displays a first interface of the first application, and the second display area displays a second interface of the first application.

13. The electronic device according to claim 12, wherein the first application comprises a desktop application, and the preset operation is an operation used to indicate to move an application on a desktop; and when the one or more processors execute the computer instructions, the electronic device is further enabled to perform the following operations:
indicating, by the electronic device, the touchscreen to display a first interface of the desktop application in the first display area, wherein the first interface is a display interface of a plurality of interfaces on the desktop; and
indicating, by the electronic device, the touchscreen to display a second interface of the desktop application in the second display area, wherein the second interface is an interface on which the to-be-moved application is located.

14. The electronic device according to claim 12, wherein the first application comprises a camera application, and the preset operation is an operation used to indicate to start photographing or complete photographing; and when the one or more processors execute the computer instructions, the electronic device is further enabled to perform the following operations:
indicating, by the electronic device, the touchscreen to display a first interface of the camera application in the first display area, wherein the first interface is a photographing interface; and
indicating, by the electronic device, the touchscreen to display a second interface of the camera application in the second display area, wherein the second interface is a photo interface.

15. The electronic device according to claim 12, wherein the first application comprises a gallery application, and the preset operation is an operation used to indicate to edit a photo in a gallery; and when the one or more processors execute the computer instructions, the electronic device is further enabled to perform the following operations:
indicating, by the electronic device, the touchscreen to display a first interface of the gallery application in the first display area, wherein the first interface is an original photo state display interface; and
indicating, by the electronic device, the touchscreen to display a second interface of the gallery application in the second display area, wherein the second interface is a photo editing state display interface.

16. The electronic device according to claim 12, wherein the first application comprises a social application, and the preset operation is an operation used to indicate to start chatting; and when the one or more processors execute the computer instructions, the electronic device is further enabled to perform the following operations:
indicating, by the electronic device, the touchscreen to display a first interface of the social application in the first display area, wherein the first interface is a message prompt interface; and
indicating, by the electronic device, the touchscreen to display a second interface of the social application in the second display area, wherein the second interface is a chatting interface.

17. The electronic device according to claim 12, wherein the first application comprises a video application, and the preset operation is an operation used to indicate to take a screenshot; and when the one or more processors execute the computer instructions, the electronic device is further enabled to perform the following operations:
indicating, by the electronic device, the touchscreen to display a first interface of the video application in the first display area, wherein the first interface is a video playing interface; and
indicating, by the electronic device, the touchscreen to display a second interface of the video application in the second display area, wherein the second interface is a screenshot display interface.

18. The electronic device according to claim 12, wherein the first application comprises a file edit application, and the preset operation is an operation used to indicate to start editing; and when the one or more processors execute the computer instructions, the electronic device is further enabled to perform the following operations:
indicating, by the electronic device, the touchscreen to display a first interface of the file edit application in the first display area, wherein the first interface is a file display interface; and
indicating, by the electronic device, the touchscreen to display a second interface of the file edit application in the second display area, wherein the second interface is a keyboard input interface.

19. The electronic device according to claim 12, wherein the first application comprises a file management application, and the preset operation is an operation used to indicate to copy or move a file; and when the one or more processors execute the computer instructions, the electronic device is further enabled to perform the following operations:
indicating, by the electronic device, the touchscreen to display a first interface of the file management application in the first display area, wherein the first interface is a file storage path interface; and
indicating, by the electronic device, the touchscreen to display a second interface of the file management application in the second display area, wherein the second interface is a selected-file display interface.

20. A computer-readable storage medium, comprising instructions, wherein when the instructions are run on an electronic device, the electronic device is enabled to perform the split-screen display processing method according to any one of claims 1 to 10.
